(19) Europäisches Patentamt
European Patent Office
Office européen des brevets

(11) **EP 4 119 302 A1**

(12) **EUROPEAN PATENT APPLICATION**

(43) Date of publication:
**18.01.2023 Bulletin 2023/03**

(21) Application number: **21185872.5**

(22) Date of filing: **15.07.2021**

(51) International Patent Classification (IPC):
***B25J 9/16*** (2006.01)

(52) Cooperative Patent Classification (CPC):
**B25J 9/1638; G05B 19/404;** G05B 2219/37344

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Bitterolf, David**
**91056 Erlangen (DE)**
• **Puchtler, Thomas**
**91325 Adelsdorf (DE)**
• **Tauchmann, Sven**
**09127 Chemnitz (DE)**

(54) **A METHOD FOR ESTIMATING ONE OR MORE PROCESS FORCES ASSOCIATED WITH A TOOL CENTER POINT OF A MACHINE TOOL**

(57) The current disclosure describes a method for estimating one or more process forces associated with a tool center point of a machine tool. The method comprises determining a first set of axis torques along the one or more axes of the machine tool based on a model associated with the machine tool or a first machining run without performing a machining operation, measuring a second set of axis torques along the one or more axes of the machine tool during machining, and determining the one or more process forces associated with the tool center point of the machine tool based on the first set and second set of axis torques. Accordingly, the current disclosure describes a method for estimating the process forces acting on the tool center point of the machine tool without using a forcing measuring cell or sensor at the tool center point.

FIG 1

**Description**

Background

The current disclosure relates to numerically controlled machine tools in industrial facilities and more particularly, it relates to estimate process forces acting on the machine tool during machining. Numerically controlled machine tools including robots are used for performing a plurality of operations in industrial facilities such as drilling, milling, fiber placement, hardening, probing, etc., based on a predefined set of instructions. When performing such operations, the machine tool experiences one or more process forces acting upon it which may cause deviations from a programmed path and wear and tear in the machine tool, particularly on the tool tip.

Description

The current disclosure relates to machine tools in industrial facilities which are used for performing a plurality of operations. While such operations are conducted, exchange of forces occurs between the tool and the workpiece, when there is contact between the tool and the workpiece. Especially such forces are exerted at the center point of the tool tip of the machine tool in contact with the workpiece. The amplitude of these forces depends, among other things, on the many process parameters (such as axial and radial infeed, spindle speed, etc.) as well as the material properties or also on the condition of the tool. The knowledge of these forces (amplitude and direction of the force vector) can be advantageous from various points of view for the user.

For example, such forces may be used in process analysis in order to optimize operations of the machine tool or in order to detect collisions if no operation or tool infeed is programmed or to trace the force for quality assurance aspects for each part. For example, the machining process can be improved by studying the correlation between force events (jump, peak) and marks on the workpiece surface. In another example, monitoring of such process forces can help estimate changes in material properties or wear of the tool or to detect collisions or anomalous events in relation to the machine tool. Similarly, monitoring of process forces is also relevant in calculation of paths. In CNC applications, great importance is attached to maintaining the programmed path. Especially in applications in which rather high process forces arise, such as milling, the process forces affect the flexible machine structure and cause deviations from the programmed path. The knowledge of the process forces together with a physical model of the structure of the system enables the calculation of compensation angles for the machine axes and thus an increase in path accuracy. Especially in industrial robots, which are particularly flexible due to their construction, such compensation plays a decisive role for the feasibility of many applications.

However, monitoring of such process forces is often challenging. Conventionally, such forces are measured using sensors installed near the tool tip or on work piece side. For this purpose, the force measuring device or sensor would have to be installed close to the process. This is difficult to implement in practice due to space constraints and is often expensive. Often, due to insufficient space at the tool tip, a force measuring cell can usually not be installed directly on the tool center point but must be installed a little remotely. This reduces the accuracy of the force measurement and adds another compliant component to the kinematics. Accordingly, there is a need for a method and a device which addresses the issues mentioned above.

Accordingly, the current disclosure describes a method for estimating one or more process forces associated with a tool center point of a machine tool. The machine tool is capable of performing a machining operation in accordance with a predefined path. The method comprises determining a first set of axis torques along the one or more axes of the machine tool based on a model associated with the machine tool, measuring a second set of axis torques along the one or more axes of the machine tool during machining, and determining the one or more process forces associated with the tool center point of the machine tool based on the determined first set of axis torques and the measured second set of axis torques.

Accordingly, the current disclosure describes a method for estimating the process forces acting on the tool center point of the machine tool without using a force measuring cell or sensor at the tool center point or close to it. Using the model, first set of axis torques can be determined. Subsequently, by subtracting the first set of axis torques from the second set of axis torques, the exact counterforce to the process force can be determined. Accordingly, this allows for an estimation of process forces without any expensive hardware. Additionally, this allows for a reduction in the effort due to the freedom of maintenance and calibration.

In another aspect, the current disclosure describes another method for estimating one or more process forces associated with a tool center point of the machine tool. The method comprises determining a first set of axis torques along the one or more axes of the machine tool based on a first machining run of machine tool in accordance with the predefined path without performing the machining operation, measuring a second set of axis torques along the one or more axes of the machine tool during a second machining run, wherein the machine tool is performing the machining operation on a work piece during the second machining run, and determining the one or more forces associated with the tool center point of the machine tool based on the determined first set of axis torques and the measured second set of axis torques.

Accordingly, the current disclosure describes another method for estimating the process forces acting on the tool center point of the machine tool without using a forcing measuring cell or sensor at the tool center point or close to it. By performing a first run without any machining operations, the first set of axis torques can be determined. Subsequently, by subtracting the first set of axis torques from the second set of axis torques, the exact counterforce to the process force can be determined. Accordingly, this allows for an estimation of process forces without any expensive hardware. Additionally, this allows for a reduction in the effort due to the freedom of maintenance and calibration.

In an example, the machine tool includes a plurality of elements capable of cooperating kinematically with each other and a drive for moving the plurality of elements of the machine tool. In an example, either of the above-mentioned methods further comprises adapting the predefined path based on the estimated one or more process forces associated with the tool center point of the machine tool for compensating for a deviation caused by the estimated one or more process forces. Accordingly, based on the estimated process forces the machining operation can be dynamically controlled to avoid machining artifacts or errors. In yet another example, either of the above-mentioned methods comprises detecting a collision based on the estimated one or more process forces. The collision can be a desired collision, when the machine tool is used for probing or an undesired collision, when a crash occurs. Accordingly, when such collisions are detected, machining operations may be suspended to ensure safe operations within the industrial facility, especially in collaborative environments or when machining expensive parts.

In yet another example, either of the above-mentioned methods further comprises determining a value of a degradation parameter indicative of wear and tear of the tool, based on the estimated one or more process forces. Accordingly, this allows for effective scheduling of maintenance activities for the machine tool.

In an example, the model can imply acceleration forces of the one or more axes of the machine tool. In another example, the model can imply friction forces of the one or more axes of the machine tool. Accordingly, by using the model, various physical forces, e.g., gravity, acting upon the machine tool can be simulated while determining the first set of axis torques.

In another aspect, the current disclosure describes a control device for estimating one or more process forces associated with a tool center point of a machine tool in an industrial facility, wherein the machine tool is capable of performing a machining operation in accordance with a predefined path. The control device comprises a network interface for receiving and transmitting data to one or more devices in the industrial facility, and one or more processors connected to a memory module. The one or more processors are configured to determine a first set of axis torques along the one or more axes of the machine tool based on one of a model associated with the machine tool and a first machining run of machine tool in accordance with the predefined path without performing the machining operation, measure a second set of axis torques along the one or more axes of the machine tool during machining, and determine the one or more process forces associated with the tool center point of the machine tool based on the determined first set of axis torques and the measured second set of axis torques.

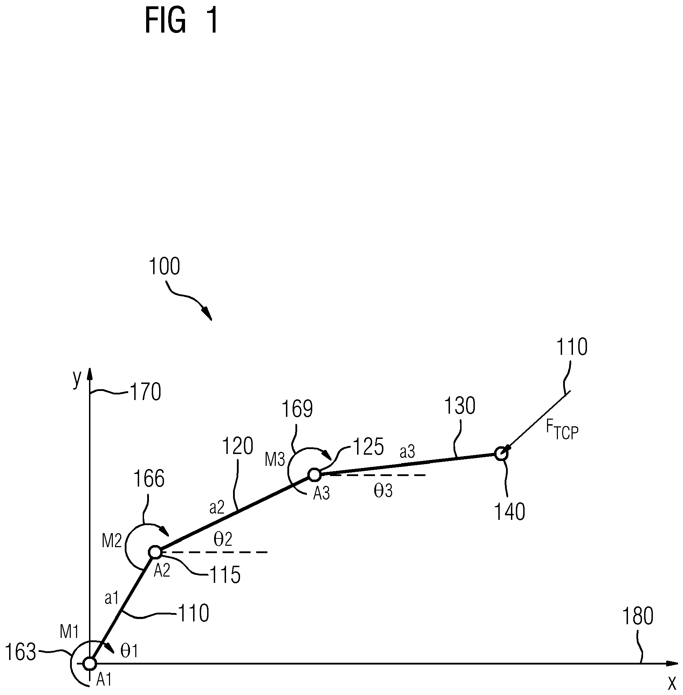

In yet another aspect, the current disclosure describes a non-transitory storage medium for estimating one or more process forces associated with a tool center point of a machine tool in an industrial facility, wherein the machine tool is capable of performing a machining operation in accordance with a predefined path. The non-transitory storage medium comprises a plurality of instructions, which when executed on one or more processors, cause the one or more processors to determine a first set of axis torques along the one or more axes of the machine tool based on one of a model associated with the machine tool and a first machining run of machine tool in accordance with the predefined path without performing the machining operation, measure a second set of axis torques along the one or more axes of the machine tool during machining, and determine the one or more process forces associated with the tool center point of the machine tool based on the determined first set of axis torques and the measured second set of axis torques. Advantages of the methods apply to the device and the non-transitory storage medium as well. These aspects are further described in relation figures 1-4.

Figure 1 illustrates an example machine tool in industrial facility;

Figure 2 illustrates an example method for estimating the one or more process forces associated with the tool center point of the machine tool;

Figure 3 illustrates another example method for estimating the one or more process forces associated with the tool center point of the machine tool; and

Figure 4 illustrates an example control device for estimating the one or more process forces associated with the tool center point of the machine tool.

Figure 1 illustrates an example machine tool 100. Machine tool herein refers to a tool or robot which is capable of performing one or more operations based on a predefined program and includes collaborative robots, numerically controlled machines, etc. The machine tool 100 includes a plurality of elements or arm segments (shown in the figure as elements 110, 120, 130). Each element is connected to another element at a joint and is accordingly, movable along one or more planes in relation to another element to which it is connected. The plurality of elements includes a terminating element (for example element 130). The element 130 includes a tool tip 140 which is used to perform one or more physical operations on a workpiece. Such physical operations include drilling, painting, milling, etc. Additionally, the example machine tool 100 is connected to a numerical control device (also referred to as a control device, not shown in the figure). The control device (also referred to as controller) is configured to control the operation of the machine tool based on a program code including a plurality of instructions which define the movement of the machine tool along a predefined path, along with the characteristics of the operation to be performed.

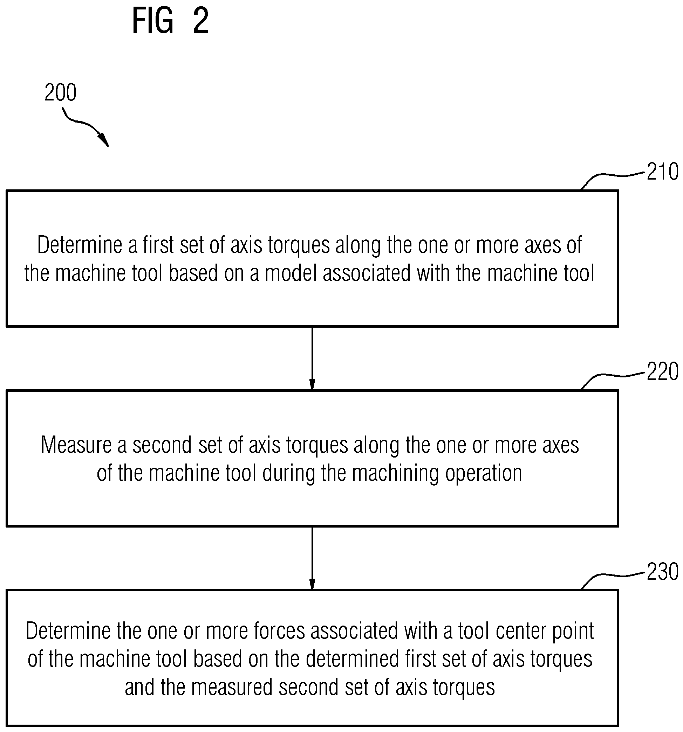

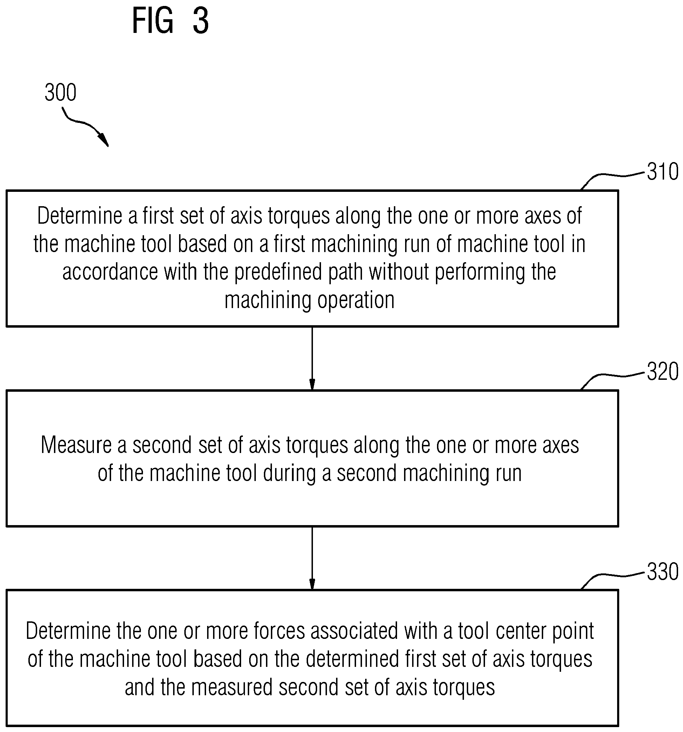

Accordingly, while the machine tool performs the operation in accordance with the program code, the machine tool experiences one or more process forces (shown as forces 110) at the tool center point 140. As mentioned previously, the control device monitors the one or more process forces, for optimizing operations of the machine tool. For example, the control device can improve the machining process by determining a correlation between force events (jump, peak) and marks on the workpiece surface. In another example, based on the monitoring of such process forces, the control device estimate changes in material properties or wear of the tool or detect accidents or anomalous events in relation to the machine tool. Similarly, monitoring of process forces is also relevant in calculation of paths. Based on the monitored process forces along a physical model of the machine tool 100, the control device calculates compensation angles for the machine axes along the programmed path of the machine tool in order to address potential deviations which may be caused due to the one or more process forces. The control device monitors the one or more process forces by determining a first set of axis torques which are associated with the machine tool while not performing a machining operation and measuring a second set of axis torques during the machining operation. Process force generally refers to the force and torques that affect the process at Tool Center Point at the same time. The torque in the axle-related motor is meant as the axis torque and may also include: the axial force of a linear motor or torque motor. Based on the first set of axis torques and the second set of axis torques, the control device determines the one or more process forces acting upon the tool center point of the machine tool. This is further explained in relation to figures 2 and 3.

Figure 2 illustrates a method 200 for estimating the one or more process forces associated with the tool center point of the machine tool 100. As mentioned previously, the machine tool 100 is capable of performing a machining operation in accordance with a predefined path. In an example, the method 200 is implemented by the control device. At step 210, the control device determines the first set of axis torques along the one or more axes of the machine tool based on a model associated with the machine tool. The model as mentioned herein refers to a physical model of the machine tool which is able to simulate a plurality of forces associated with the machine tool. For example, the model is a three-dimensional, linear multi-element model. Components of the model are physical and geometric variables, such as: mass properties of the individual elements of the machine tool 100 and mass behavior in space, resilience of the joints and drive trains of the machine tool 100, the resilience of the elements of the machine tool 100, linear damping properties of the spring elements of the machine tool 100, geometric constraints and/or linear dependencies between individual degrees of freedom and definition of the joints (type, position and alignment). The details of the model are further described in a related patent document titled Apparatus and method for managing and controlling motion of a multiple body system', having application number EP14171752A filed on 10th Jun 2016 from the same applicant as the current disclosure.

For example, the model is capable of simulating forces due to the weight of the elements. The weight forces act at the center of gravity of the individual system components and cause holding torques on hanging axes. The relationship between the weight force and the axis holding moments is particularly position-dependent in robots. Similarly, in an example, the model is capable of simulating friction amongst the various elements of the machine tool. Similarly, in another example, the model is configured to simulate one or more acceleration forces. Acceleration forces are applied when a velocity change is required in relation to the elements of the machine tool 100. During the machining process, the feed at Tool Center Point is usually kept constant. Only the balancing movements due to the kinematic transformation may require acceleration. In most cases, however, these acceleration forces can be neglected. The first set of forces are stored in a memory of the control device after being determined using the model.

Then, at step 220, the control device measures a second set of axis torques along the one or more axes of the machine tool during machining. In an example, the second set of axis torques is determined using the joint motors of the machine tool 100.

At step 230, the control device determines the one or more process forces associated with the tool center point of the machine tool based on the determined first set of axis torques and the measured second set of axis torques. Generally, it can be assumed that the axis torques are adjusted from all undesirable influences (gravity, friction, acceleration) and form the exact counterforce to the one or more process forces at the tool center point. Accordingly, during static equilibrium, the axis torques, and the process forces can be related according to the following equation:

$$B_{\text{joint}} \cdot F_{\text{joint}} + B_{\text{axis}} \cdot M_{\text{axis}} = B_{\text{process}} \cdot F_{\text{Process}} \quad (1)$$

Where

$F_{\text{joint}}$ represents a vector of the joint support forces. These forces are not required for the calculation in the first step, come along as a "waste product". Assuming that each joint allows exactly one degree of freedom, 5 support forces (or torques) are required per joint of the plurality of joints of the machine tool 100;

$B_{\text{joint}}$ represents a matrix of the distribution of the joint forces on the individual elements of the machine tool 100;

$M_{\text{axis}}$ represents a vector of the axis torques;

$B_{\text{axis}}$ represents a matrix of the distribution of the axle torques on the individual elements of the machine tool 100;

$F_{\text{process}}$ represents a vector of the process forces acting on the tool center point;

$B_{\text{process}}$ represents a matrix of the distribution of the process forces on the individual elements of the machine tool 100. Usually, the process forces act only on a single element, namely the terminating element of the machine tool including the tool tip.

Based on the above equation, $F_{\text{process}}$ is to be determined based on the first and second set of axis forces. Accordingly, for determining the process forces, the first set of axis forces is subtracted from the measured second set of axis torques. Since the first set of axis forces are estimated using the model under no load or no machining operation condition, the first set of axis forces are generated due to weight of the elements primarily. The second set of axis forces are measured during the machining operation and therefore reflect the weight of the elements along with the process forces. Accordingly, by eliminating the first set of axis forces from the second set of forces, the influence of weight of the elements is removed, leaving only resultant axis forces indicative of the process forces acting upon the tool center point. Using these resultant axis forces along with the angles between the elements of the machine tool 100, the one or more process forces can be determined using a system of equation associated with the machine tool 100. This is further illustrated with example equations as described below.

For example, the machine tool 100 can be considered as a simple 3-axes system as follows

- Axis 1 is a rotary axis around the Z-direction. Rotation center is in A1. The joint torque is M1.
- Axis 2 is a rotary axis around the Z-direction. Rotation center is in A2. The joint torque is M2.
- Axis 3 is a rotary axis around the Z-direction. Rotation center is in A3. The joint torque is M3.

The position of the 3 axes is given from the angles θ1, θ2, and θ3. In order to simplify the problem, we consider the problem in the plane. This means that the forces only have 2 components along the X- and Y-axes and 1 torque component around the Z-axis. Since the first set of torques have been subtracted from the second set of torques, gravity and weight related forces do not have to considered in formulation of the system of the equation. Accordingly, we can build a system of equation to calculate the forces at TCP. This is can be done via the steps described below:

Following forces are acting on the third body element 130:

- $F_{2\rightarrow3}$: Reaction force from second body element 120 on third body element 130
- $F_{\text{TCP}}$: Force at TCP

This leads to following equation:

$$\vec{F}_{2\rightarrow3} + \vec{F}_{TCP} = 0$$

If we project this equation on the x- and y-axes

$$\begin{cases} F_{2\rightarrow3,x} + F_{TCP,x} = 0 \\ F_{2\rightarrow3,y} + F_{TCP,y} = 0 \end{cases}$$

Following torques are acting on the third body element 130:

- $M_3$: Joint torque of axis 3 in point A3
- $M_{TCP}$: Torque at TCP

First, we must transpose the torque $M_{TCP}$ at point A3. To do this, we use the three force coordinates around the x-, y- and z-axes.

$$\begin{pmatrix} 0 \\ 0 \\ M_{TCP,A3} \end{pmatrix}_{A3} = \begin{pmatrix} 0 \\ 0 \\ M_{TCP} \end{pmatrix}_{TCP} + \overrightarrow{A_3TCP} \wedge \vec{F}_{TCP}$$

$$\begin{pmatrix} 0 \\ 0 \\ M_{TCP,A3} \end{pmatrix}_{A3} = \begin{pmatrix} 0 \\ 0 \\ M_{TCP} \end{pmatrix}_{TCP} + \begin{pmatrix} a_3cos\theta_3 \\ a_3sin\theta_3 \\ 0 \end{pmatrix} \wedge \begin{pmatrix} F_{TCP,x} \\ F_{TCP,y} \\ 0 \end{pmatrix}$$

$$M_{TCP,A3} = M_{TCP} + a_3cos\theta_3 F_{TCP,y} - a_3sin\theta_3 F_{TCP,x}$$

Now we can write the equation of torque balance at point A3.

$$M_3 + M_{TCP} + a_3cos\theta_3 F_{TCP,y} - a_3sin\theta_3 F_{TCP,x} = 0$$

Following forces are acting on the second body element 120:

- $F_{1\rightarrow2}$: Reaction force from the first body element 110 on the second body element 120
- $F_{3\rightarrow2}$: Reaction force from the third body element 130 on the second body element 120 $F_{3\rightarrow2}$ = - $F_{2\rightarrow3}$

If we project this equation on the x- and y-axes

$$\begin{cases} F_{1\rightarrow2,x} - F_{2\rightarrow3,x} = 0 \\ F_{1\rightarrow2,y} - F_{2\rightarrow3,x} = 0 \end{cases}$$

Following torques are acting on the second body element 120:

- $M_2$: Joint torque of axis 2 in point A2
- $M_{3\rightarrow2}$: Reaction torque of axis 3 in point A3

Here also, the first step is to transpose the torque in A3 to the A2, in order to be able to write the equation of torque balance in A2.

$$\begin{pmatrix} 0 \\ 0 \\ M_{3\rightarrow2,A2} \end{pmatrix}_{A2} = \begin{pmatrix} 0 \\ 0 \\ M_{3\rightarrow2,A3} \end{pmatrix}_{A3} + \overrightarrow{A_2A_3} \wedge \vec{F}_{3\rightarrow2}$$

$$M_{3\rightarrow2,A2} = M_{3\rightarrow2,A3} + a_2cos\theta_2 F_{3\rightarrow2,y} - a_2sin\theta_2 F_{3\rightarrow2,x}$$

We also know that the reaction torque $M_{3\rightarrow2,A3}$ is actually the counter joint torque M3. This means that:

$$M_{3\to2,A3} = -M_3$$

And on the other hand

$$\vec{F}_{3\to2} = -\vec{F}_{2\to3}$$

As a consequence:

$$M_{3\to2,A2} = -M_3 - a_2cos\theta_2F_{2\to3,y} + a_2sin\theta_2F_{2\to3,x}$$

And we can write the torque balance of the second body element 120:

$$M_2 - M_3 - a_2cos\theta_2F_{2\to3,y} + a_2sin\theta_2F_{2\to3,x} = 0$$

In the same way as for the second body element 120, we can write the force balance equation for the first body element 110

$$\begin{cases} F_{0\to1,x} - F_{1\to2,x} = 0 \\ F_{0\to1,y} - F_{1\to2,x} = 0 \end{cases}$$

In the same way as for the second body element 120, we can write the torque balance equation for body 1 after transposing all the torque in point A1

$$M_1 - M_2 - a_1cos\theta_1F_{1\to2,y} + a_1sin\theta_1F_{1\to2,x} = 0$$

Based on the above mentioned nine equations of balance (6 force balances, 3 torque balances), the 9 unknowns (6 reaction forces, 2 TCP forces and 1 TCP torque) can be solved since the equation system is homogenous.

$$\begin{cases} F_{2\to3,x} + F_{TCP,x} = 0 \\ F_{2\to3,y} + F_{TCP,y} = 0 \\ M_3 + M_{TCP} + a_3cos\theta_3F_{TCP,y} - a_3sin\theta_3F_{TCP,x} = 0 \\ F_{1\to2,x} - F_{2\to3,x} = 0 \\ F_{1\to2,y} - F_{2\to3,x} = 0 \\ M_2 - M_3 - a_2cos\theta_2F_{2\to3,y} + a_2sin\theta_2F_{2\to3,x} = 0 \\ F_{0\to1,x} - F_{1\to2,x} = 0 \\ F_{0\to1,y} - F_{1\to2,x} = 0 \\ M_1 - M_2 - a_1cos\theta_1F_{1\to2,y} + a_1sin\theta_1F_{1\to2,x} = 0 \end{cases}$$

In addition to the TCP forces and torque, all the reaction forces can be calculated, but those are not very useful.

In an example, the first set of axis forces are determined using the model for each interpolation cycle of the controller (also referred to as control device). Similarly, the second set of axis forces are measured for each interpolation cycle of the controller. The second set of axis forces and the first set of axis forces occupy the same points along the time dimension and are therefore in the same time frame. While in the above method, a model is used for estimating the first set of torques, the first set of torques can also be measured based on a non-machining run of the machine tool in accordance with the programmed path. This is further explained in relation to figure 3.

Figure 3 illustrates a method 300 for estimating the one or more process forces associated with the tool center point of a machine tool 100. As mentioned previously, the method 300 is realized by the control device. At step 310, the control device determines the first set of axis torques along the one or more axes of the machine tool based on a first machining run of machine tool in accordance with the predefined path without performing the machining operation. For the determination of the first set of axis torques, the control device operates the machine tool in accordance with the predefined path or programmed path without performing any machining operation on the work piece. Accordingly, the first set of torques measured at the joints are indicative of the weight forces and do not have any influence originating from the process forces. Then at step 320, the control device measures a second set of axis torques along the one or more axes of the machine tool during a second machining run, wherein the machine tool is performing the machining operation on a work piece during the second machining run. This is as previously described in the step 220 of the method 200. Then at step 330, the control device determines the one or more forces associated with the tool center point of the machine tool based on the determined first set of axis torques and the measured second set of axis torques. This is akin to the previously described step 230 of the method 300. Similarly, in an example, the first set of axis forces are measured for each interpolation cycle of the controller (also referred to as control device). Similarly, the second set of axis forces are measured for each other interpolation cycle of the controller. The second set of axis forces and the first set of axis forces occupy the same points along the time dimension and are therefore in the same time frame.

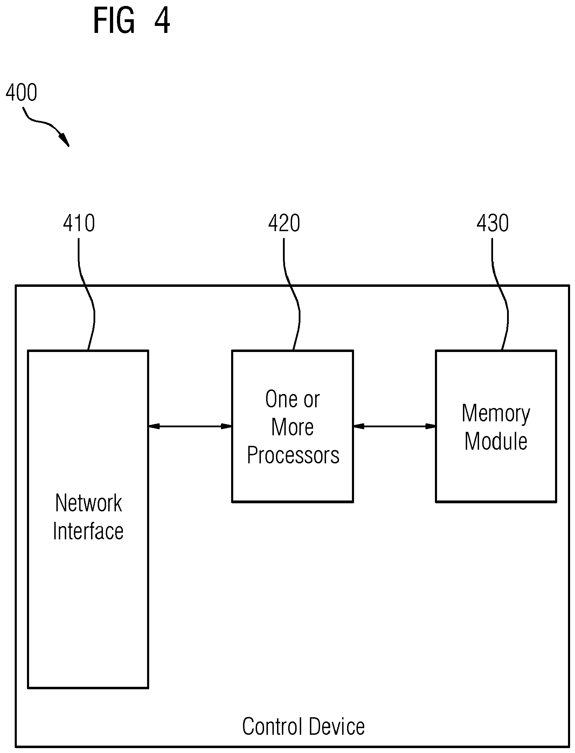

While the above method 200 and 300 have been explained in relation to the control device, the above method may be realized in one or more devices. For example, the above methods may be realized in a server connected to a control system including the control device, a part in the control device and a part in the server, etc. Accordingly, in another aspect, the current disclosure describes a control device 400 as shown in figure 4. The control device 400 includes a network interface 410 for receiving and transmitting data to one or more devices in the industrial facility, and one or more processors 420 connected to a memory module 430 (also referred to as non-transitory storage medium 430). The memory module 430 includes one or more instructions which when executed on the one or more processors, cause the one or more processors to determine a first set of axis torques in each interpolation cycle of the controller along the one or more axes of the machine tool based on one of a model associated with the machine tool and a first machining run of the machine tool in accordance with the predefined path without performing the machining operation, measure a second set of axis torques in each interpolation cycle of the control loop along the one or more axes of the machine tool during machining, and determine the one or more process forces associated with the tool center point of the machine tool based on the determined first set of axis torques and the measured second set of axis torques in each interpolation cycle.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) for estimating one or more process forces associated with a tool center point (140) of a machine tool (100), wherein the machine tool (100) is capable of performing a machining operation in accordance with a predefined path, the method (200) comprising:

     a. determining (210) a first set of axis torques along the one or more axes of the machine tool (100) based on a model associated with the machine tool (100) ;
     b. measuring (220) a second set of axis torques along the one or more axes of the machine tool (100) during the machining operation; and
     c. determining (230) the one or more process forces associated with the tool center point (140) of the machine tool (100) based on the determined first set of axis torques and the measured second set of axis torques.

2. A method (300) for estimating one or more process forces associated with a tool center point (140) of a machine tool (100), wherein the machine tool (100) is capable of performing a machining operation in accordance with a predefined path, the method (300) comprising:

> a. determining (310) a first set of axis torques along the one or more axes of the machine tool (100) based on a first machining run of the machine tool (100) in accordance with the predefined path without performing the machining operation;
>
> b. measuring (320) a second set of axis torques along the one or more axes of the machine tool (100) during a second machining run, wherein the machine tool (100) is performing the machining operation on a work piece during the second machining run; and
>
> c. determining (330) the one or more forces associated with the tool center point (140) of the machine tool (100) based on the determined first set of axis torques and the measured second set of axis torques.

3. The method (200, 300) as claimed in claim 1 or 2, wherein the machine tool (100) includes a plurality of elements (110,120,130) capable of cooperating kinematically with each other and a drive for moving the plurality of elements (110,120,130) of the machine tool (100) .

4. The method (200, 300) as claimed in claim 1 or 2, wherein the method (200, 300) further comprises adapting the predefined path based on the estimated one or more process forces associated with the tool center point (140) of the machine tool (100) for compensating for a deviation caused by the estimated one or more process forces.

5. The method (200, 300) as claimed in claim 1 or 2, wherein the method (200, 300) further comprises detecting a collision or contact of the robot based on the estimated one or more process forces.

6. The method (200, 300) as claimed in claim 1 or 2, wherein the method (200, 300) further comprises determining a value of a degradation parameter indicative of wear and tear of the machine tool (100), based on the estimated one or more process forces.

7. The method (200) as claimed in claim 1, wherein the model can imply acceleration forces of the one or more axes of the machine tool (100).

8. The method (200) as claimed in claim 1, wherein the model can imply friction forces of the one or more axes of the machine tool (100).

9. The method (200) as claimed in claim 1, wherein the first set of axis forces are determined in each interpolation cycle of the controller and wherein the second set of axis forces are measured in each interpolation cycle of the controller.

10. The method (200) as claimed in claim 1, wherein the first set of axis forces are measured in each interpolation cycle of the controller and wherein the second set of axis forces are measured in each other interpolation cycle of the controller.

11. A control device (400) for estimating one or more process forces associated with a tool center point (140) of a machine tool (100) in an industrial facility, wherein the machine tool (100) is capable of performing a machining operation in accordance with a predefined path, the control device (400) comprising:

> a. a network interface (410) for receiving and transmitting data to one or more devices in the industrial facility;
>
> b. one or more processors (420) connected to a memory module (430), the one or more processors (420) configured to:
>
>> i. determine a first set of axis torques along the one or more axes of the machine tool (100) based on one of a model associated with the machine tool (100) and a first machining run of machine tool (100) in accordance with the predefined path without performing the machining operation;
>>
>> ii. measure a second set of axis torques along the one or more axes of the machine tool (100) during machining; and
>>
>> iii. determine the one or more process forces associated with the tool center point (140) of the machine tool (100) based on the determined first set of axis torques and the measured second set of axis torques.

12. A non-transitory storage medium (430) for estimating one or more process forces associated with a tool center point (140) of a machine tool (100) in an industrial facility, wherein the machine tool (100) is capable of performing a machining operation in accordance with a predefined path, the non-transitory storage medium (430) comprising a plurality of instructions, which when executed on one or more processors (420), cause the one or more processors (420) to:

a. determine a first set of axis torques along the one or more axes of the machine tool (100) based on one of a model associated with the machine tool (100) and a first machining run of the machine tool (100) in accordance with the predefined path without performing the machining operation;

b. measure a second set of axis torques in along the one or more axes of the machine tool (100) during machining; and

c. determine the one or more process forces associated with the tool center point (140) of the machine tool (100) based on the determined first set of axis torques and the measured second set of axis torques.

# FIG 1

# FIG 2

200

210

Determine a first set of axis torques along the one or more axes of the machine tool based on a model associated with the machine tool

220

Measure a second set of axis torques along the one or more axes of the machine tool during the machining operation

230

Determine the one or more forces associated with a tool center point of the machine tool based on the determined first set of axis torques and the measured second set of axis torques

# FIG 3

300

310

Determine a first set of axis torques along the one or more axes of the machine tool based on a first machining run of machine tool in accordance with the predefined path without performing the machining operation

320

Measure a second set of axis torques along the one or more axes of the machine tool during a second machining run

330

Determine the one or more forces associated with a tool center point of the machine tool based on the determined first set of axis torques and the measured second set of axis torques

## FIG 4

400

410                    420                    430

Network
Interface

One or
More
Processors

Memory
Module

Control Device

Europäisches
Patentamt

European
Patent Office

Office européen
des brevets

# EUROPEAN SEARCH REPORT

Application Number

EP 21 18 5872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 000187 B3 (KUKA ROBOTER GMBH [DE]) 26 January 2017 (2017-01-26) * paragraphs [0002], [0015] - [0022] * | 1-12 | INV. B25J9/16 |
| A | DENKENA BEREND ET AL: "Reconstruction of Process Forces in a Five-Axis Milling Center with a LSTM Neural Network in Comparison to a Model-Based Approach", JOURNAL OF MANUFACTURING AND MATERIALS PROCESSING, vol. 4, no. 3, 2 July 2020 (2020-07-02), page 62, XP055866369, DOI: 10.3390/jmmp4030062 Retrieved from the Internet: URL:http://dx.doi.org/10.3390/jmmp4030062> * 2.2 model based force reconstruction; the whole document * | 1-12 | |
| A,D | EP 2 954 986 A1 (SIEMENS AG [DE]) 16 December 2015 (2015-12-16) * paragraphs [0046] - [0048]; claims 1-12 * | 1-12 | TECHNICAL FIELDS SEARCHED (IPC)<br><br>B25J<br>B23Q |

The present search report has been drawn up for all claims

| Place of search | Date of completion of the search | Examiner |
|---|---|---|
| Munich | 26 November 2021 | Frey, Richard |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

........................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 21 18 5872

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2021

| Patent document cited in search report | Publication date | Patent family member(s) | Publication date |
|---|---|---|---|
| DE 102016000187 B3 | 26-01-2017 | CN 108463314 A<br>DE 102016000187 B3<br>EP 3402632 A1<br>US 2019009410 A1<br>WO 2017121635 A1 | 28-08-2018<br>26-01-2017<br>21-11-2018<br>10-01-2019<br>20-07-2017 |
| EP 2954986 A1 | 16-12-2015 | EP 2954986 A1<br>JP 6430335 B2<br>JP 2015231663 A<br>US 2015355647 A1 | 16-12-2015<br>28-11-2018<br>24-12-2015<br>10-12-2015 |

EPO FORM P0459

For more details about this annex : see Official Journal of the European Patent Office, No. 12/82

**REFERENCES CITED IN THE DESCRIPTION**

**Patent documents cited in the description**

- EP 14171752 A